# EUROPEAN PATENT APPLICATION

(11) **EP 1 956 277 A1**
(43) Date of publication of application: **13.08.2008**
(21) Application number: 07002760.2
(22) Date of filing: 08.02.2007
(51) Int. Cl.: F16K 15/04, F16K 15/06

(54) **Valve**

(71) Applicant: SIEMENS AKTIENGESELLSCHAFT, 80333 München (DE)
(72) Inventor: Kay, Peter, LN5 0TP Navenby, Lincoln (GB)

(57) **Abstract**

Disclosed is a valve (1), comprising a movable valve control member (2), an inlet port (3) forming a seat (4) for the valve control member (2), an outlet port (5), a passage (6) extending through the valve control member (2), the passage (6) having first and second parts (7,8) with first and second cross-sectional areas (9,10), the second cross-sectional area (10) being larger than the first cross-sectional area (9), a spigot (11) fixedly arranged at the outlet port (5) and extending partly into the second part (8) of the passage (6), and a spring element (12) for pushing the valve control member (2) against the seat (4) in a direction opposing a fluid flow direction.

## Description

### FIELD OF THE INVENTION

The present invention relates to a valve. More particularly the present invention relates to a valve regulating two distinct pressure regimes.

### BACKGROUND OF THE INVENTION

Turbochargers in operation on diesel engines rely on a supply of oil for the lubrication and cooling of its journal and thrust bearings.

The lubricating oil for the turbocharger is normally taken from the engines oil system. In the case of large (5-20 MW) reciprocating medium speed diesel engines there is both an engine and turbocharger need for oil 'priming' to ensure adequate lubrication and warming prior to engine start up, and also a 'post run' supply of lubrication to extract heat immediately following engine shutdown.

The lubrication supply system of large diesel engines is often made by a combination of oil pumps; crankshaft driven pumps for main oil supply during engine operation, and separate electric driven pumps for 'priming' and 'post run' lubrication.

Turbocharger components are sensitive to the correct supply of lubrication.

During engine and turbocharger operation the recommended range of oil inlet pressure to the turbocharger is typically required to be between 2 and 3 barg. With an oil supply greater than the maximum value, there is a risk of oil leakage from the turbocharger seals. Where this is known to occur, 'oil orifices' are fitted in the oil supply pipe work to reduce the oil pressure to the turbocharger.

During 'priming', and 'post run' lubrication the recommended range of oil inlet pressure is typically between 0.1 and 0.5 barg. With an oil supply greater than the maximum value there is a risk of oil leakage from the turbocharger seals.

Since the oil pressure regulating devices and pumps are often distant from the turbocharger and linked via numerous oil galleries and passageways, the control of the oil pressure entering the turbocharger is often imprecise. Where for example the oil pressure is controlled near the oil pump, the pressure of oil at the turbocharger will be higher when the engine and oil are relatively cold during priming than when the engine is hot after operation when the flows of oil through bearings would be proportionally greater.

Technical solutions for turbocharger oil leakage and starvation problems often rely on multiple valves, pumps and control mechanisms, adding additional expense and risk of malfunction.

### SUMMARY OF THE INVENTION

An object of the invention is to provide an improved valve leading to an enhanced tolerance to varied oil supply pressures.

This object is achieved by claim 1. The dependent claims describe advantageous developments and modifications of the invention.

An inventive valve comprises components already known from standard hydraulic one-way-valves, also known as check valves, having one inlet port and one outlet port and allowing fluids to flow through it in only one direction. Hydraulic one-way-valves work automatically without any external control. A valve control member, usually a ball, the movable part to block the flow, is spring-loaded to stay seated against the inlet port and only open the valve at the cracking pressure, which is the minimum downstream pressure at which the valve will operate.

The appreciable differences of the inventive valve compared to the standard check valve are firstly, a central hole through the valve control member, a ball, and secondly, in the high pressure regime, an additional functionality of the spigot usually arranged at an outlet opening of the valve and pointing in an upstream direction relative to the flow of the fluid, forming a guiding mechanism for the valve control member.

The size of the valve control member and the inner profile of the valve are such that, when the valve control member is seated against the inlet opening, the passage between the valve control member and the inner wall of the valve is closed and when the valve control member moves downstream relative to the flow of a fluid, the passage between the valve control member and the inner wall of the valve is open.

The central hole through the valve control member is a passage with first and second parts having different cross-sectional areas, the second part being downstream of the first part, relative to the flow of the fluid. The second cross-sectional area is larger than the first cross-sectional area and large enough to let the spigot extend into the second part of the passage, whereas the first cross-sectional area is smaller than the tip of the spigot, so that the first part of the passage is fully blocked by the spigot when the valve control member is at its most downstream position.

In a low pressure regime, during 'priming' or 'post run', where the inlet pressure is below the cracking pressure (typically less than 1.5 barg) the valve control member or valve ball is seated against its seat. Oil flow is regulated by the hole through the ball. Between the recommended 0.1 and 0.5 barg there is minimal restriction imposed by the hole through the ball. At pressures between 0.5 and 1.1 barg the small hole increasingly forms a restriction making the resultant oil flow into the turbocharger acceptable.

When the pressure exceeds a first threshold value in the range between 1 and 2 barg (typically 1.5 barg), the valve lifts off from its seat and oil flows around the valve and through the central hole. When operating, as long as the inlet pressure is in the range between 2 and 3 barg, the oil flow is otherwise unimpeded.

At inlet pressures above a second threshold value in the range between 3 and 4 barg (typically 3.0 barg), the oil flow through the central hole is closed off by the additional movement of the valve, and the flow around the valve becomes increasingly restricted by the profile of the valves housing. Thus an inlet pressure of 5 barg results in an oil flow that would be normally expected with an inlet pressure of 3.5 barg.

In an advantageous embodiment a more elaborate inner profile of the valve has a reduced flow area in downstream direction, i.e. at the position of the valve control member for increased inlet pressure.

In an alternative arrangement the spring rate can be varied to achieve different cracking pressures.

Such a design of the valve enhances the tolerance of the turbocharger to varied oil supply pressures, thus saving cost and improving reliance compared to complex control systems.

### BRIEF DESCRIPTION OF THE DRAWINGS

The invention will now be further described with reference to the accompanying drawings in which:
- Figure 1: represents a sectional side view of the inventive valve at low pressure condition,
- Figure 2: represents a sectional side view of the inventive valve at mid pressure condition,
- Figure 3: represents a sectional side view of the inventive valve at high pressure condition, and
- Figure 4: represents a sectional side view of the inventive valve with a more elaborate inner profile.

In the drawings like references identify like or equivalent parts.

### DETAILED DESCRIPTION OF THE INVENTION

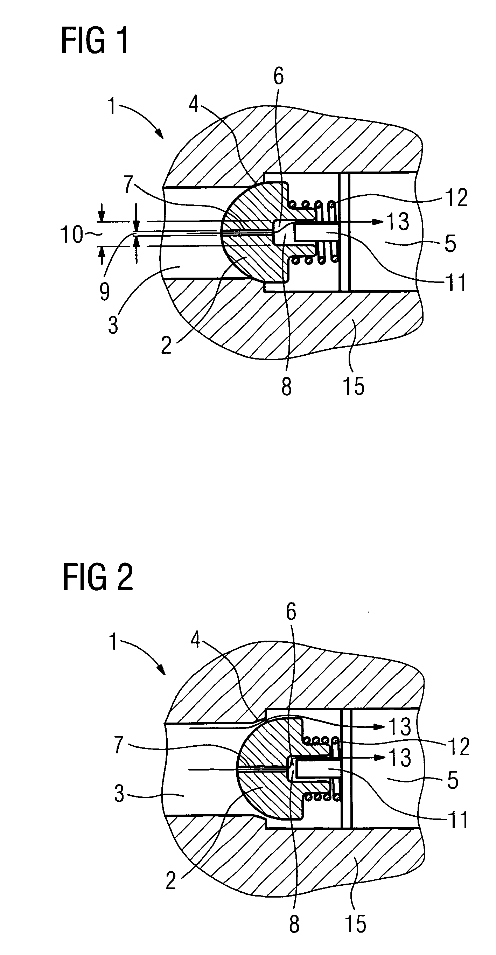

Figure 1 schematically shows the side view of an inventive valve 1 comprising a valve control member 2, an inlet port 3 forming a seat 4 for the valve control member 2, an outlet port 5, a passage 6 extending through the valve control member 2, the passage 6 having first and second parts 7,8 with first and second cross-sectional areas 9,10, the second cross-sectional area 10 being larger than the first cross-sectional area 9, a cylinder-shaped spigot 11 arranged at the outlet port 5 and protruding partly into the second part 8 of the passage 6, and a spring element 12 for pushing the valve control member 2 against the seat 4. Figure 1 shows a low pressure situation during 'priming' or 'post run' of a turbocharger, where the inlet pressure is below the cracking pressure (less than 1.5 barg) and the valve control member 2 is seated against its seat 4. Oil flow 13 is regulated by the hole through the valve control member 2.

Figure 2 shows the valve 1 of Figure 1 in another pressure regime. When the pressure exceeds a first threshold inlet pressure of typically 1.5 barg the valve control member 2 lifts off from its seat 4 and oil flows around the valve control member 2 and through the passage 6.

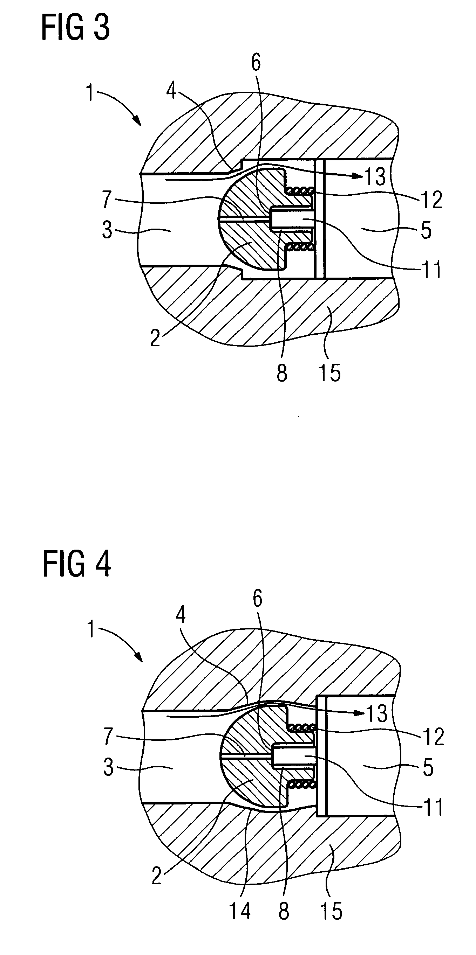

With reference to Figure 3, an inventive valve 1 at inlet pressures above a second threshold inlet pressure of typically 3.0 barg is shown, where the oil flow 13 through the passage 6 is closed off by the additional movement of the valve control member 2, and the flow around the valve control member 2 becomes increasingly restricted by the profile of the valves 1 housing 15.

Figure 4 represents an alternative embodiment with a more elaborate inner profile 14 of the valve 1, showing a decreasing inner diameter in downstream direction, to reduce the flow area, and hence flow with increasing inlet pressure.

Although preferred embodiments of the invention have been described especially in applications with lubricating oil, it is to be understood that the invention is also applicable to other fluids.

## Claims

1. A valve (1), comprising:
a movable valve control member (2),
an inlet port (3) having a seat (4) for the valve control member (2),
an outlet port (5),
a passage (6) extending through the valve control member (2), the passage (6) having first and second parts (7,8) with first and second cross-sectional areas (9,10), the second cross-sectional area (10) larger than the first cross-sectional area (9),
a spigot (11) fixedly arranged at the outlet port (5) and extending partly into the second part (8) of the passage (6), and
a spring element (12) for pushing the valve control member (2) against the seat (4) in a direction opposing a fluid flow direction (13).

2. The valve (1) as claimed in claim 1, wherein the valve control member (2) is seated at the inlet port (3) if a current inlet pressure is smaller than a first inlet threshold pressure.

3. The valve (1) as claimed in claim 2, wherein the valve control member (2) is lifted off its seat (4) at the inlet port (3) if a current inlet pressure is larger than the first threshold inlet pressure.

4. The valve (1) as claimed in claim 1, wherein a fluid flow (13) through the passage (6) is closed off by a downstream movement of the valve control member (2) relative to the fluid flow (13) and the fluid only flows around the valve control member (2) if a current inlet pressure is larger than a second threshold inlet pressure.

5. The valve (1) as claimed in claim 2 or claim 3, wherein the first threshold inlet pressure is in a range between 1 and 2 barg.

6. The valve (1) as claimed in 5, wherein the first threshold inlet pressure is 1.5 barg.

7. The valve (1) as claimed in claim 4, wherein the second threshold inlet pressure is in the range between 3 and 4 barg.

8. The valve (1) as claimed in claim 7, wherein the second threshold inlet pressure is 3 barg.

9. The valve (1) as claimed in any of the preceding claims, wherein the fluid is a lubricating oil.

10. A turbocharger comprising a valve (1) as claimed in any of the preceding claims.
